# FASCICULE DE BREVET EUROPEEN

(11) **EP 0 465 312 B1**
(45) Date de publication et mention de la délivrance du brevet: **09.11.1994**
(21) Numéro de dépôt: 91401752.0
(22) Date de dépôt: 27.06.1991
(51) Int. Cl.: D21D 5/04, D21B 1/32, D21B 1/34

(54) **Dispositif de triage d'un mélange de pate à papier et de contaminants**
Vorrichtung zur Trennung einer Mischung von Faserbrei und Verunreinigungen
Screening apparatus for a mixture of paper pulp and contaminants

(30) Priorité: 02.07.1990 FR 9008321
(43) Date de publication de la demande: 08.01.1992
(73) Titulaire: E & M LAMORT, F-51300 Vitry le François (FR)
(72) Inventeur: Lamort, Jean-Pierre, F-51300 Vitry le François (FR)
(74) Mandataire: Loyer, Bertrand

(56) Documents cités:
- DE-A- 2 346 120
- DE-A- 3 334 448

## Description

La présente invention concerne un dispositif utilisé dans les installations de récupération de vieux papiers pour la production de pâte à papier.

Comme on le sait, la récupération des vieux papiers prend une place de plus en plus importante dans l'industrie du papier mais elle devient de plus en plus complexe à mettre en oeuvre à cause de la prolifération des contaminants telles que des feuilles de matière plastique, des ficelles, morceaux de verre,...

C'est pourquoi on a déjà proposé, par exemple par le DE-A-3 334 448 et le EP-A-0 120 766 d'utiliser des dispositifs de triage d'un mélange de pâte à papier et d'impuretés prélevé à la base des pulpeurs primaires dans lesquels les vieux papiers sont déchiquetés et mélangés à de l'eau.

Ces dispositifs de type connu et largement répandus se présentent sous la forme d'un volume clos globalement de révolution comportant une paroi sensiblement verticale munie d'une plaque perforée devant laquelle tourne une hélice.

Ledit volume comporte une entrée située à l'opposé de la grille perforée par laquelle on admet le mélange en provenance du pulpeur, une sortie pour la pâte acceptée et une autre sortie pour les contaminants.

Le mélange remplissant le volume est aspiré par une pompe située à l'arrière de la grille sur la canalisation d'évacuation de la pâte à papier.

L'hélice a pour unique rôle de créer une dépression devant la grille perforée à chaque passage de ses ailettes afin d'éviter que les ouvertures de la grille ne soient bouchées par des amas d'impuretés.

Ces dispositifs généralement connus sous le nom de poire de vidange, bien que donnant satisfaction peuvent présenter certain inconvénients en fonctionnement.

Ainsi, on peut se trouver confronté au cas d'un contaminant de petite section et de grande longueur, par exemple une allumette, qui s'engage dans une perforation de la grille. Dans un tel cas, la dépression créée par l'hélice devant la grille ne suffit pas à extraire le contaminant. Au contraire, les pales de l'hélice peuvent sectionner le contaminant et créer ainsi des morceaux très petits qui sont alors difficiles à séparer de la pâte à papier.

Un autre problème qui peut se produire tient au fait que l'hélice étant présente uniquement pour créer une dépression en vue du nettoyage de la grille, n'entraîne pas en déplacement le liquide présent dans le volume. La pâte n'est alors mise en mouvement que lorsqu'elle est près d'une pale et cela brusquement; elle est donc entraînée par la pale lorsqu'elle arrive contre la grille et subit l'aspiration de la pompe. Les différents corps se trouvant dans la pâte à papier sont alors soumis à une très forte accélération qui peut provoquer un fractionnement de contaminants.

La présente invention a pour objectif de proposer un dispositif qui permette de pallier ces divers inconvénients et d'obtenir un meilleur triage de la pâte à papier et des impuretés.

A cet effet, l'invention concerne un dispositif de triage d'un mélange de pâte à papier et de contaminants du genre formé d'un volume globalement cylindrique séparé en deux volumes par une paroi comportant une grille calibrée, la pâte à papier contaminée étant admise par une ouverture du volume d'entrée située dans la paroi opposée à la paroi de séparation, la pâte à papier nettoyée étant évacuée par une canalisation de sortie débouchant dans le volume de sortie tandis que les contaminants sont éliminés par une sortie du volume d'entrée, caractérisé en ce qu'une hélice de brassage est prévue près de la surface amont de la paroi de séparation tandis qu'une hélice de nettoyage est prévue près de la surface avale de la paroi de séparation.

Le dispositif est encore remarquable en ce que:
- l'hélice de brassage propulse le liquide près de son axe de rotation en direction opposée de la paroi de séparation et l'aspire près de sa circonférence externe.
- la paroi du volume d'entrée opposée à la paroi de séparation est bombée et en ce que l'ouverture d'admission de la pâte à papier contaminée est dirigée vers l'axe de l'hélice de brassage.
- l'hélice de nettoyage créé une pression sur la surface avale de la paroi de séparation.
- les pales de l'hélice de nettoyage sont rectilignes et sont en forme de dièdre largement ouvert.
- l'hélice de brassage et l'hélice de nettoyage sont montées sur un arbre unique entraîné par un moteur et traversent la paroi de séparation.
- la face amont de la paroi comporte des barrettes ou nervures de raidissement.
- les barrettes s'étendent radialement depuis l'arbre.

L'invention sera mieux comprise et d'autres caractéristiques et avantages de celle-ci ressortiront de la description qui va suivre d'un exemple de réalisation de celle-ci en référence au dessin dans lequel:
- la figure 1 est une vue en coupe partielle du dispositif selon l'invention,
- la figure 2 est une vue partielle en coupe de l'hélice de nettoyage,
- la figure 3 est une vue selon la flèche IV de la figure 2,
- la figure 4 représente les coupes A-A, B-B, C-C, D-D de la figure 3.

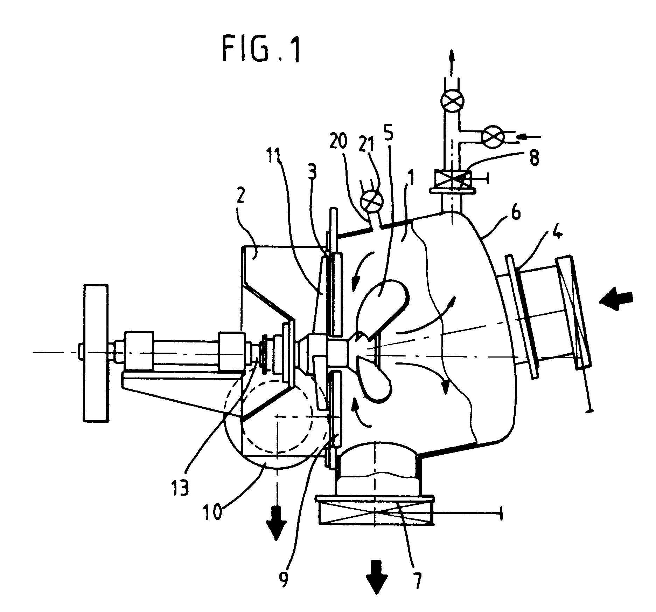

On voit à la figure 1 le dispositif selon l'invention, celui-ci est formé d'un volume globalement cylindrique séparé en deux parties 1,2 par une paroi 3 formée par une grille calibrée. La pâte à papier mêlée à des impuretés est admise dans le volume d'entrée 1 par l'ouverture 4 reliée à un pulpeur non représenté. Dans le volume 1, on a prévu près de la surface amont de la paroi 3 une hélice de brassage 5 ayant pour mission, contrairement aux dispositifs connus, de brasser fortement la pâte ce qui permet de mieux séparer les fibres de papier des contaminants.

L'hélice de brassage 5 est une hélice de petite dimension qui est capable de brasser fortement la pâte même si sa vitesse de rotation est peu importante. La pâte étant entraînée à la vitesse de l'hélice, les risques de casse au passage des pales sont alors éliminés.

De préférence, l'hélice de brassage 5 sera telle qu'elle propulse le liquide vers la paroi opposée 6 du volume 1 près de son axe de rotation et l'aspire près de sa circonférence externe. En agissant de la sorte, d'une part les contaminants lourds restent près de la paroi 6 et ne viennent pas perturber le passage des fibres de papier à travers la grille 3 et d'autre part, les fibres arrivent suivant une direction inclinée près de la grille où règne une légère dépression et sont mieux aspirées à travers celle-ci.

Si l'on utilisait une hélice de brassage propulsant la pâte vers sa circonférence externe, les fibres seraient alors plaquées contre la grille et seraient chassées parallèlement à elle par un mouvement centrifuge au lieu de la traverser.

Le volume 1 est de manière connue en soi d'axe légèrement incliné par rapport à l'horizontal afin de faciliter l'élimination des contaminants par la sortie 7.

La paroi 6 est tombée afin de peu perturber le mouvement de la pâte soumise au mouvement de brassage l'ouverture 4 par laquelle la pâte à trier est admise, est prévue dans l'axe du volume et dirigée vers l'axe de l'hélice de brassage 5 ce qui gêne peu le mouvement de la pâte. L'appareil comporte en outre une arrivée d'eau 20 contrôlée par une vanne 21 et une conduite 8 d'alimentation en air comprimé et de dégazage.

Comme on le voit sur la figure 1 des barrettes 9 sont également prévues sur la surface amont de la grille perforée 3 qui se trouve dans le volume 1. Ces barrettes, ou nervures ont pour fonction de raidir la grille perforée soumise à de très fréquentes et brutales variations de pression, et de créer des turbulences dans le mouvement de la pâte agitée par l'hélice 5. En effet, la pâte sous l'influence de l'hélice de brassage prend un mouvement circulaire. Il se produit comme un courant laminaire circulaire au voisinage des parois, notamment de la grille. L'introduction de barrettes radiales a pour conséquence de perturber ce courant et de créer des turbulences favorisant l'agitation des fibres dans ou par l'hélice.

Dans le volume 2 que l'on pourrait désigner par l'appellation volume de sortie, débouche une canalisation de sortie 10 dans laquelle est agencée une pompe afin dévacuer la pâte à papier délivrée des contaminants.

Le volume 2 comporte selon l'invention une hélice de nettoyage 11 dont les pales tournent à faible distance de la surface avale de la paroi perforée 3. Cette hélice de nettoyage 11 est destinée à créer une pression sur la surface de la grille au passage de ses pales afin de repousser dans le volume 1 les amas de fibres et les contaminants risquant de boucher les perforations.

Ainsi, contrairement aux dispositifs connus, le nettoyage de la grille est assurée par la création d'une pression du côté aval de la grille au lieu de créer une dépression du côté amont de celle-ci.

Cette disposition de deux hélices, l'une de brassage et l'autre de nettoyage permet d'effectuer le tri de la pâte à papier et des contaminants de manière tout à fait intéressante.

L'hélice de nettoyage 11 ne risque en aucun cas de sectionner un contaminant coincé dans la grille; son action par l'instauration d'une pression à l'arrière de la grille est beaucoup plus efficace que celle des hélices placées de manière connue du côté amont de la grille.

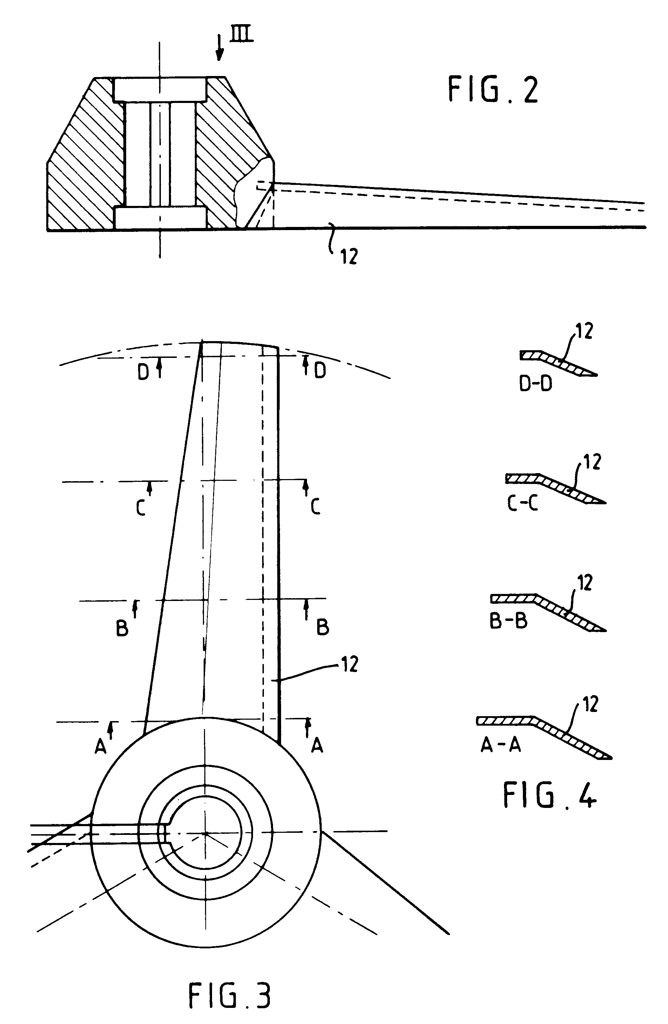

Comme le montrent les figures 2,3 et 4, l'hélice de nettoyage 11 est prévue avec des pales 12 globalement rectilignes afin d'éviter de centrifuger la pâte à papier ayant traversé la grille 3.

Selon l'invention les pales de l'hélice de nettoyage présentent une face amont inclinée vers la grille 3. En coupe transversale la pale peut présenter un profil cintré ou droit ou encore, comme dans l'exemple de réalisation illustré à la figure 4, un profil en forme de dièdre. L'inclinaison de la face orientée vers la grille est de préférence variable radialement afin d'adapter la pression de nettoyage à la vitesse linéaire de la pale.

L'hélice de nettoyage est disposée à proximité immédiate de la grille : le bord de la pale du côté de la grille est à une distance très faible de la surface de la grille de l'ordre du millimètre afin d'éviter toute fuite et de produire une contrepression efficace maximale.

Comme on le voit à la figure 1, les hélices de brassage 5 et de nettoyage 11 sont montées sur un arbre 13 unique qui traverse les parois de séparation des deux volumes 2 et 1. Cet arbre 13 est entraîné en rotation par tout moyen non représenté au dessin.

En outre le dispositif comporte sur chaque entrée 4, 8 et sortie 7, 10 des électrovannes permettant un fonctionnement similaire à celui connu des dispositifs de vidange et décrit au EP-A 0 120 766 : on admet un mélange de pâte à papier et de contaminants par l'ouverture 4, puis on admet de l'eau en 8 à mesure que l'on élimine de la pâte à papier par la sortie 10. L'admission d'eau est stoppée lorsque la teneur de la pâte sortant en fibres de papier devient inférieure à une valeur déterminée à l'avance pour laquelle on considère que les contaminants sont lavés de toute fibre.

Après avoir vidé le dispositif de la pâte diluée, on ouvre la sortie 7 afin d'éliminer les contaminants.

La mise en oeuvre de l'hélice de brassage 5 du côté amont de la paroi perforée 3 permet d'assurer une bonne séparation des fibres et des contaminants, tandis que l'hélice de nettoyage 11 placée du côté aval débouche la paroi perforée sans risquer ni de sectionner un contaminant coincé dans une perforation, ni de casser un contaminant soumis à une accélération trop brutale car cette hélice se trouve dans de la pâte à papier nettoyée.

## Revendications

1. Dispositif de triage d'un mélange de pâte à papier et de contaminants obtenu par une désintégration dans un pulpeur du type hélice, du genre formé par un volume globalement cylindrique séparé en deux volumes (1,2) par une grille calibrée, la pâte à papier contaminée étant admise par une ouverture (4) du volume d'entrée (1) située sur la paroi opposée à la grille (3) de séparation, la pâte nettoyée étant évacuée par une canalisation de sortie (10) débouchant dans le volume de sortie (2) tandis que les contaminants sont éliminés par une sortie (7) du volume d'entrée (1), et du genre comportant une hélice de nettoyage (11) tournant près de la surface aval de la grille (3) de séparation, caractérisé en ce qu'une hélice de brassage (5) est prévue du côté de la surface amont de la grille (3) de séparation pour propulser le liquide près de son axe de rotation en direction opposée de la grille de séparation (3), cette paroi (6) étant bombée de façon que la matière ainsi propulsée revienne latéralement vers la grille (3) et qu'ainsi les contaminants lourds restent près de la paroi (6) et que les fibres arrivent près de la grille suivant une direction inclinée.

2. Dispositif selon la revendication 1, caractérisée en ce que les pales (12) de l'hélice de nettoyage (11) sont rectilignes et sont en forme de dièdre largement ouvert, la face amont (22) étant orientée vers la grille (3).

3. Dispositif selon la revendication 2 caractérisé en ce que la face amont de la paroi (3) comporte des barrettes ou nervures de raidissement (9).

4. Dispositif selon la revendication 3 caractérisé en ce que les barrettes (9) s'étendent radialement depuis l'arbre (13).

## Claims

1. A separation device for a mixture of paper pulp and contaminants produced by crushing in a helical pulper, of the type formed by a generally cylindrical chamber separated into two chambers (1, 2) by a sized screen, the contaminated paper pulp being admitted through an opening (4) of the inlet chamber (1) located on the wall opposite to the separation screen (3), the cleaned pulp being evacuated through an outlet channel (10) opening into the outlet chamber (2), whilst the contaminants are eliminated through an outlet (7) of the inlet chamber (1), and of the type having a cleaning screw (11) rotating close to the downstream surface of the separation screen (3), characterised in that an agitating screw (5) is provided at the upstream surface side of the separation screen (3) to propel the liquid close to its axis of rotation in a direction away from the separation screen (3), this wall (6) being domed such that the material thus propelled returns laterally towards the screen (3) and that the heavy contaminants thus remain close to the wall (6) and that the fibres arrive close to the screen in an inclined direction.

2. A device according to Claim 1, characterised in that the blades (12) of the cleaning screw (11) are rectilinear and are in the shape of a wide angle dihedron, the upstream face (22) being oriented towards the screen (3).

3. A device according to Claim 2, characterised in that the upstream face of the wall (3) has stiffening bars or ribs (9).

4. A device according to Claim 3, characterised in that the bars (9) extend radially from the shaft (13).

## Patentansprüche

1. Vorrichtung zur Trennung einer Mischung von Papier-Stoff und Verunreinigungen aus einem Aufschluß in einem Flügelrad-Stofflöser, wobei die Vorrichtung ein allgemein zylindrisches, durch eine Kalibrierscheibe in zwei Räume (1, 2) unterteiltes Volumen aufweist und der verschmutze Papier-Stoff über eine Öffnung (4) des Einlaßraumes (1) zugeführt wird, die auf der der Trennscheibe (3) gegenüberliegenden Wand angebracht ist, wobei der gereinigte Stoff über eine in den Auslaßraum (2) mündende Auslaßleitung (10) abgezogen wird, während die Verunreinigungen durch einen Auslaß (7) des Einlaßraums (1) entfernt werden, und wobei ferner ein Reinigungs-Flügelrad (11) vorgesehen ist, das sich nahe bei der stromabwärts liegenden Oberfläche der Trennscheibe (3) dreht, **dadurch gekennzeichnet**, daß ein Rührrad (5) auf der Seite der stromaufwärts liegenden Oberfläche der Trennscheibe (5) vorgesehen ist, um die Flüssigkeit nahe seiner Drehachse in eine von der Trennscheibe (3) abgewandte Richtung zu fördern, wobei die Wand (6) derart gewölbt ist, daß das so geförderte Material seitlich zur Scheibe (3) zurückläuft und so die schweren Verunreinigungen nahe bei der Wand (6) verbleiben und die Fasern nahe bei der Scheibe unter einer geneigten Richtung ankommen.

2. Vorrichtung nach Anspruch 1, dadurch gekennzeichnet, daß die Flügel (12) des Reinigungsrades (11) geradlinig und in Form eines weit offenen Dieders ausgebildet sind, wobei die stromaufwärts liegende Seite zur Scheibe (3) hin ausgerichtet ist.

3. Vorrichtung nach Anspruch 2, dadurch gekennzeichnet, daß die stromaufwärts liegende Oberfläche der Wand (3) mit Versteifungsstegen (9) oder -Rippen versehen ist.

4. Vorrichtung nach Anspruch 3, dadurch gekennzeichnet, daß die Stege (9) sich radial bis zur Welle (13) erstrecken.
